# EUROPÄISCHE PATENTANMELDUNG

(11) **EP 4 597 315 A1**
(43) Veröffentlichungstag der Anmeldung: **06.08.2025**
(21) Anmeldenummer: 24155047.4
(22) Anmeldetag: 31.01.2024
(51) Int. Cl.: G06F 9/48, G06F 9/54, G06F 9/50

(54) **VERFAHREN ZUM VERMEIDEN VON RESSOURCEN-ENGPÄSSEN BEI INDUSTRIELLEN GERÄTEN, SYSTEM UND INDUSTRIELLES GERÄT**

(71) Anmelder: Siemens Aktiengesellschaft, 80333 München (DE)
(72) Erfinder: Feist, Christian Peter, 80689 München (DE)
(74) Vertreter: Siemens Patent Attorneys

(57) **Zusammenfassung**

Die vorliegende Erfindung betrifft ein Verfahren und ein System zum Vermeiden von Ressourcen-Engpässen bei industriellen Geräten einer Automatisierungsanlage mit ladbaren Applikationen, mit den Schritten: Überwachen der Nutzung von Ressourcen eines industriellen Gerätes während des Betriebes der Automatisierungsanlage; Erkennen einer kritischen Ressourcen-Nutzung einer Ressource des industriellen Gerätes durch Vergleichen mit definierten Ressourcennutzung-Schwellwerten; Assoziieren der erkannten kritischen Ressourcen-Nutzung mit einer momentan aktiven Applikationskonfiguration von auf dem jeweiligen industriellen Gerät ausgeführten Applikationen; Prüfen vor dem Starten einer weiteren geladenen Applikation auf dem industriellen Gerät, ob für die momentan aktive Applikationskonfiguration eine kritische Ressourcen-Nutzung vorliegt oder in der Vergangenheit vorlag; und Ausgeben einer Meldung über eine Ausgabeeinheit an einen Betreiber der Automatisierungsanlage dahingehend, dass das Ausführen der weiteren Applikation auf dem industriellen Gerät zu einem Ressourcen-Engpass führen kann, falls die vorgenommene Prüfung ergibt, dass für die momentan aktive Applikations-Konfiguration eine kritische Ressourcen-Nutzung vorliegt.

## Beschreibung

Die vorliegende Erfindung betrifft ein Verfahren zum Vermeiden von Ressourcen-Engpässen bei industriellen Geräten einer Automatisierungsanlage mit ladbaren Applikationen. Die vorliegende Erfindung betrifft ferner ein System sowie ein industrielles Gerät.

Durch die zunehmende Vernetzung von Geräten in industriellen Anwendungen, insbesondere bei Automatisierungsanlagen, sowie dem zunehmenden Bedarf größere Datenmengen für die Optimierung von Herstellungsprozessen lokal zu verarbeiten, werden industrielle Geräte flexibel hinsichtlich ihrer Funktionalität gestaltet. Dies wird insbesondere durch das Verwenden von nachladbaren Applikationen APPs ermöglicht, mit denen die Gerätefunktionalität auch im Feld, insbesondere auf Edge-Geräten, einfach und schnell angepasst werden kann.

In Automatisierungsszenarien werden hohe Anforderungen an die Verfügbarkeit solcher industrieller Geräte gestellt. Weiterhin wird einem Anwender bzw. Betreiber ein möglichst breites Spektrum an nachladbaren Applikationen angeboten, welche zur Laufzeit nachgeladen werden können. Die Sicherstellung der Verfügbarkeit der durch den Betreiber definierten Funktionalität eines solchen Gerätes gestaltet sich somit deutlich schwieriger.

Die verfügbaren Ressourcen (CPU, RAM, Netzwerkbandbreite, etc.) sind auf industriellen Geräten beschränkt, vor allem auf Embedded Devices wie beispielsweise Industrial PCs (IPCs), HMI Panels, etc., die in einer Automatisierungsanlage häufig vorzufinden sind.

Im Gegensatz zu IT-Szenarien, in denen ein Administrator mit umfassenden System-Know-How die Geräte verwaltet, besitzt ein Betreiber einer industriellen Anwendung typischerweise keinen Einblick in die Ressourcenauslastung.

Weiterhin verfügt der Betreiber einer Automatisierungsanlage in der Regel nicht über das notwendige Know-How, um beurteilen zu können, welche Ressourcen in welchem Umfang für seine Automatisierungsanwendung benötigt werden.

Werden durch einen Gerätebauer von industriellen Geräten weitreichende Beschränkungen hinsichtlich der Vergabe von Ressourcen vorgegeben (z.B. maximale Anzahl an installierbaren Apps), beschränkt dies den Umfang möglicher Anwendungen des betreffenden industriellen Gerätes und somit den Mehrwert für den Betreiber. Zudem ist ein Definieren solcher Einschränkungen nur bedingt möglich, da die benötigten Ressourcen oft von der durch Betreiber der Automatisierungsanlage gewählten Konfiguration abhängen. Gibt es hingegen wenige oder keine solcher Einschränkungen, kann das industrielle Gerät maximal flexibel konfiguriert und genutzt werden. Allerdings steigt hierdurch das Risiko, in einen Ressourcenengpass zu laufen (z.B. ein Out-Of-Memory (OOM) Szenario durch das Installieren und Ausführen zu vieler Applikationen), wodurch die Verfügbarkeit und/oder die Funktionalität des industriellen Gerätes eingeschränkt werden kann. Herkömmliche Ansätze weisen einen Betreiber reaktiv erst bei oder nach Auftreten von Funktionseinschränkungen auf bestehende Ressourcenengpässe hin.

Es ist bekannt, die Anzahl an installierbaren bzw. ausführbaren Applikationen zu beschränken, um einen Ressourcenengpass zu vermeiden. Dies kann z.B. durch einen Vergleich von auf dem Gerät verfügbaren Ressourcen (z.B. verfügbarer Arbeitsspeicher/RAM), mit den durch Applikationen spezifizierten Ressourcengrenzwerten erfolgen. Für einen App-Entwickler sind diese Grenzwerte allerdings nur schwer abzuschätzen, da die durch die Applikationen APPs benötigten Ressourcen von einer durch den Betreiber der Automatisierungsanlage spezifizierten Konfiguration bzw. Verwendung der Applikation abhängen. Wird der Ressourcenbedarf der Applikation APP seitens des Entwicklers falsch eingeschätzt, bleiben Ressourcen auf einem industriellen Gerät ungenutzt.

Von Linux sind so genannte cgroups (Control Groups) bekannt. Diese Kontrollgruppen werden verwendet, um die Verwendung von Ressourcen durch Prozesse einzuschränken. Beispielsweise lässt sich hiermit der für einen Prozess maximal verfügbare Speicher definieren. Überschreitet der Prozess diese Grenze, kann das Betriebssystem (OS-Kernel) beispielweise versuchen, Teile des Speichers wieder freizumachen (reclaim), oder den Prozess zu beenden. Die Kontrollgruppen werden beispielsweise in Kombination mit Docker Containern oder Kubernetes Pods verwendet, um Ressourcenbeschränkungen für Container zu definieren.

Es ist zudem eine so genannte OOM-Killer-Funktionalität bekannt. Dabei handelt es sich um einen Mechanismus des Linux-Betriebssystems, mit dem im Falle einer kompletten Speicherauslastung, d.h. bei einem OOM (Out-Of-Memory)-Szenario, ein Prozess durch den OS-Kernel beendet werden kann, um Speicherplatz freizumachen. Dabei wählt der OS-Kernel auf Basis eines OOM-Scores einen Prozess aus, der anschließend beendet wird. Für einen Betreiber der Automatisierungsanlage lässt sich jedoch hierbei nicht zuverlässig vorhersagen, welcher Prozess beendet wird. Es werden somit zusätzliche Maßnahmen benötigt, um einen robusten Betrieb eines industriellen Gerätes der Automatisierungsanlage zu ermöglichen. Das Verhalten des sogenannten OOM-Killers lässt sich durch Parametrierung beeinflussen. So können beispielsweise einzelne Prozesse im Falle eines Speicherengpasses bevorzugt behandelt werden. Zudem ist bekannt, das Eingreifen des OOM-Killers als Ereignis zu festzuhalten, z.B. in einer Log-Datei. Auf diese Weise kann ein Betreiber der Automatisierungsanlage benachrichtigt werden und entsprechend darauf reagieren. Diese herkömmliche Vorgehensweise ist allerdings reaktiv, d.h. es wird erst dann eine Warnung oder Meldung für den Betreiber der Automatisierungsanlage generiert, wenn eine Funktionsbeeinträchtigung der Automatisierungsanlage bereits aufgetreten ist.

Eine eingetretene Funktionsbeeinträchtigung der Automatisierungsanlage kann beispielsweise zu Produktionsverlusten, insbesondere zu mangelhaft hergestellten Produkten, führen. Eine Funktionsbeeinträchtigung kann auch ein Sicherheitsrisiko für Arbeiter der Automatisierungsanlage darstellen.

Vor diesem Hintergrund ist es daher eine Aufgabe der vorliegenden Erfindung, eine Funktionsbeeinträchtigung einer Automatisierungsanlage aufgrund eines durch eine ladbare Applikation verursachten Ressourcenengpasses proaktiv verhindern zu können.

Diese Aufgabe wird erfindungsgemäß gelöst durch ein Verfahren mit den Merkmalen des Patentanspruchs 1 und/oder durch ein System mit den Merkmalen des Patentanspruchs 12 und/oder durch ein industrielles Gerät mit den Merkmalen des Patentanspruchs 15.

Die Erfindung schafft gemäß einem ersten Aspekt demnach ein Verfahren zum Vermeiden von Ressourcen-Engpässen bei industriellen Geräten einer Automatisierungsanlage mit ladbaren Applikationen mit den Schritten: Überwachen der Nutzung von Ressourcen eines industriellen Gerätes während des Betriebes der Automatisierungsanlage; Erkennen einer kritischen Ressourcen-Nutzung einer Ressource des industriellen Gerätes durch Vergleichen mit definierten Ressourcennutzung-Schwellwerten; Assoziieren der erkannten kritischen Ressourcen-Nutzung mit einer momentan aktiven Applikationskonfiguration von auf dem jeweiligen industriellen Gerät ausgeführten Applikationen; Prüfen vor dem Starten einer weiteren geladenen Applikation auf dem industriellen Gerät, ob für die momentan aktive Applikationskonfiguration eine kritische Ressourcen-Nutzung vorliegt oder in der Vergangenheit vorlag; und Ausgeben einer Meldung über eine Ausgabeeinheit an einen Betreiber der Automatisierungsanlage dahingehend, dass das Ausführen der weiteren Applikation auf dem industriellen Gerät zu einem Ressourcen-Engpass führen kann, falls die vorgenommene Prüfung ergibt, dass für die momentan aktive Applikations-konfiguration eine kritische Ressourcen-Nutzung vorliegt.

Die Erfindung schafft gemäß einem weiteren Aspekt ein System zur Vermeidung von Ressourcen-Engpässen bei industriellen Geräten einer Automatisierungsanlage mit ladbaren Applikationen mit: einer Überwachungseinheit, welche dazu ausgelegt ist, eine Nutzung von Ressourcen von industriellen Geräten während des Betriebs der Automatisierungsanlage zu überwachen und eine kritischen Ressourcen-Nutzung einer oder mehrerer Ressourcen eines industriellen Gerätes durch Vergleichen mit definierten Ressourcennutzungs-Schwellwerten zu erkennen, wobei eine erkannte kritische Ressourcen-Nutzung mit einer momentan aktiven Applikationskonfiguration von auf dem jeweiligen industriellen Gerät ausgeführten Applikationen assoziiert wird; einer Prüfeinheit, welche dazu ausgelegt ist, vor dem Starten einer weiteren geladenen Applikation auf einem industriellen Gerät der Automatisierungsanlage, zu prüfen, ob für die momentan aktive Applikationskonfiguration eine kritische Ressourcen-Nutzung vorliegt oder in der Vergangenheit vorlag; und mit einer Ausgabeeinheit zur Ausgabe einer Meldung an einen Betreiber der Automatisierungsanlage dahingehend, dass das Ausführen der weiteren Applikation auf dem industriellen Gerät zu einem Ressourcen-Engpass führen kann, falls die durch die Prüfeinheit vorgenommene Prüfung ergibt, dass für die momentan aktive Applikationskonfiguration eine kritische Ressourcen-Nutzung vorliegt.

Die Grundidee der Erfindung besteht darin, ein Nichteinhalten von definierten Ressourcennutzungsgrenzen einer Applikation-Konstellation bzw. Applikation-Konfiguration zu protokollieren (Schwellwert-Ereignisse) und den Betreiber einer Automatisierungsanlage beim Hinzufügen (Installation, Starten) weiterer Applikationen auf einen möglichen Ressourcenengpass hinzuweisen. Der Betreiber einer Automatisierungsanlage kann beim Installieren bzw. Starten von Applikationen somit proaktiv darauf hingewiesen werden, dass einer neuen Applikation-Konstellation bzw. Applikation-Konfiguration möglicherweise nicht genügend Ressourcen zur Verfügung stehen werden, da bei der bisherigen Applikation-Konstellation bzw. Applikation-Konfiguration bereits bestimmte Grenzen nicht eingehalten wurden bzw. definierte Schwellwerte überschritten oder unterschritten wurden.

Vorteilhafte Ausgestaltungen und Weiterbildungen ergeben sich aus den weiteren Unteransprüchen sowie aus der Beschreibung unter Bezugnahme auf die Figuren der Zeichnung.

Das erfindungsgemäße computer-implementierte Verfahren ermöglicht es, bei zur Laufzeit flexibel konfigurierbaren, Applikationsfähigen Edge-Geräten oder sonstigen industriellen Geräten einer Automatisierungsanlage mögliche Ressourcenengpässe frühzeitig zu erkennen und den Betreiber der Automatisierungsanlage proaktiv darüber zu informieren, so dass der Anlagenbetreiber einen effizienten und zugleich robusten Betrieb seiner industriellen Anwendung sicherstellen kann.

Bei einer möglichen Ausführungsform weisen die überwachten Ressourcen des industriellen Gerätes eine verfügbare Speicherkapazität von Speichern (z.B. RAM, Festplattenspeicher) des industriellen Gerätes auf. Eine Speicherüberlastung kann zu Datenverlusten führen, die erhebliche Funktionsbeeinträchtigungen der Automatisierungsanlage zur Folge haben können.

Bei einer möglichen Ausführungsform weisen die überwachten Ressourcen des industriellen Gerätes eine verfügbare Rechenkapazität von CPU-Kernen des industriellen Gerätes auf. Ein Engpass bei verfügbaren Rechenkapazitäten kann zu erheblichen zeitlichen Verzögerungen bei der Ausführung von Applikationen führen.

Bei einer möglichen Ausführungsform weisen die überwachten Ressourcen des industriellen Gerätes eine verfügbare Übertragungsrate und/oder verfügbare Übertragungszeit von internen oder externen Schnittstellen des industriellen Gerätes auf.

Bei einer möglichen Ausführungsform wird eine erkannte kritische Ressourcen-Nutzung einer Ressource des industriellen Gerätes protokolliert und gespeichert. Das Protokollieren der erkannten Ressourcen-Nutzung erlaubt eine spätere detaillierte Analyse möglicher Ursachen bei einer aufgetretenen Funktionseinschränkung der Automatisierungsanlage.

Bei einer möglichen Ausführungsform gibt die über die Ausgabeeinheit ausgegebene Meldung die protokollierte kritische Ressourcen-Nutzung an, welche die Meldung auslöst. Hierdurch wird der Betreiber bei der Behebung möglicher Fehlerursachen unterstützt.

Bei einer möglichen Ausführungsform erfolgt das Vergleichen der überwachten Ressourcen-Nutzung eines industriellen Gerätes mit definierten Ressourcennutzungs-Schwellwerten zum Erkennen einer kritischen Ressourcen-Nutzung lokal auf dem jeweiligen industriellen Gerät oder extern auf einem Überwachungssystem.

Bei einer möglichen Ausführungsform weisen die ladbaren Applikationen Metadaten auf, welche die von der jeweiligen Applikation bei dessen Ausführung benötigten Ressourcen angeben.

Bei einer möglichen Ausführungsform wird das Starten der weiteren Applikation oder die Ausführung mindestens einer laufenden Applikation automatisch unterbunden, falls die vor dem Starten der weiteren Applikation vorgenommene Prüfung ergibt, dass für die momentan aktive Applikationskonfiguration eine kritische Ressourcen-Nutzung vorliegt. Hierdurch können mögliche Fehlfunktionen der Automatisierungsanlage sicher verhindert werden.

Bei einer möglichen Ausführungsform wird eine durch Vergleichen mit Ressourcennutzungs-Schwellwerten erkannte kritische Ressourcen-Nutzung einer Ressource des industriellen Gerätes als Schwellwert-Ereignis gespeichert. Dies erleichtert die Auswertung bei Vorliegen von kritischen Ressourcennutzungen derselben oder unterschiedlicher Ressourcen.

Bei einer möglichen Ausführungsform werden für industrielle Geräte der Automatisierungsanlage gespeicherte Schwellwert-Ereignisse miteinander verglichen, um ein auffälliges Verhalten einer oder mehrerer Applikationen zu erkennen. Hierdurch können insbesondere gezielte Angriffe auf die Automatisierungsanlage erkannt und unterbunden werden.

Bei einer möglichen Ausführungsform des erfindungsgemäßen Systems weist das industrielle Gerät ein Steuerungsgerät, ein PLC, ein Mensch-Maschinen-Schnittstellengerät, ein industrielles Rechengerät, ein Edge-Gerät, ein HCI-Gerät oder ein Cloud-Gerät auf.

Bei einer möglichen Ausführungsform des erfindungsgemäßen Systems ist eine Applikations-Installations- und Konfigurationslogik zur Installation und Konfiguration von ladbaren Applikationen durch einen Betreiber der Automatisierungsanlage vorgesehen.

Bei einer möglichen Ausführungsform des erfindungsgemäßen Systems ist eine Applikations-Ausführungslogik zum Starten und Stoppen von Applikationen vorgesehen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- Fig. 1: ein Ablaufdiagramm zur Darstellung einer möglichen Ausführungsform des erfindungsgemäßen Verfahrens;
- Fig. 2: ein Blockschaltbild zur Darstellung einer möglichen Ausführungsform des erfindungsgemäßen Systems; und
- Fig. 3: ein weiteres Blockschaltbild zur Darstellung einer möglichen Ausführungsform des erfindungsgemäßen Systems.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes aufgeführt ist - jeweils mit denselben Bezugszeichen versehen.

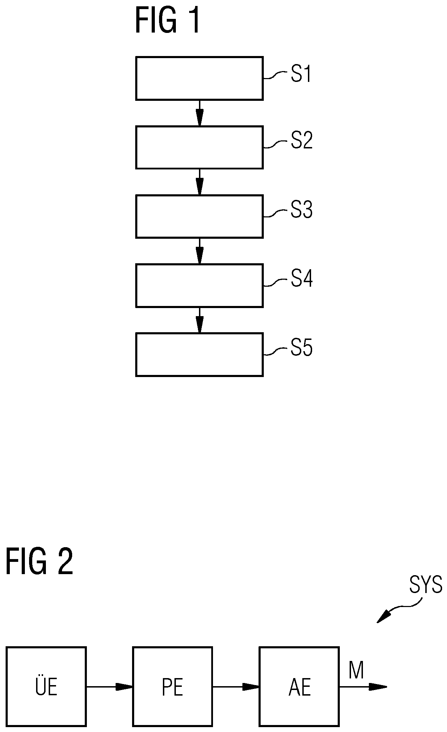

Wie man im Ablaufdiagramm gemäß der Fig. 1 erkennen kann, umfasst das erfindungsgemäße Verfahren bei der dargestellten Ausführungsform einige Hauptschritte S1-S5.

In einem ersten Schritt S1 erfolgt ein Überwachen der Nutzung von Ressourcen eines industriellen Gerätes während des Betriebes der Automatisierungsanlage.

Hierzu erfolgt vorzugsweise durch eine oder mehrere Überwachungseinheiten ÜE eine Überwachung von Metriken bezüglich der Nutzung von Ressourcen R (z.B. CPU-Auslastung, Speicherverbrauch / RAM, IO-Datenrate, Netzwerkübertragungsrate, etc.) auf einem industriellen Gerät der Automatisierungsanlage. Die Ressourcenauslastung von Ressourcen kann anhand vorgegebener Metriken gemessen werden. Die industriellen Geräte G der Automatisierungsanlage umfassen insbesondere Steuerungsgeräte, PLC, ein Mensch-Maschinen-Schnittstellengeräte, industrielle Rechengeräte, Edge-Geräte, HCI-Geräte oder angebundene Cloud-Geräte aufweist.

Die im Schritt S1 überwachten Ressourcen R des industriellen Gerätes können eine verfügbare Speicherkapazität von Speichern des industriellen Gerätes aufweisen. Ein industrielles Gerät G der Automatisierungsanlage kann einen oder mehrere Datenspeicher aufweisen. Diese Datenspeicher umfassen beispielsweise einen Arbeitsspeicher (RAM)oder eine Festplatte des industriellen Gerätes G.

Die im Schritt S1 überwachten Ressourcen R des industriellen Gerätes können ferner eine verfügbare Rechenkapazität von Rechnern des industriellen Gerätes G aufweisen. Beispielsweise verfügt das industrielle Gerät G über einen oder mehrere Prozessoren, insbesondere CPUs deren Auslastung überwacht wird.

Die im Schritt S1 überwachten Ressourcen R des industriellen Gerätes G können zudem eine verfügbare Übertragungsrate und/oder verfügbare Übertragungszeit von internen oder externen Schnittstellen des industriellen Gerätes aufweisen. Beispielsweise kann eine I/O Datenübertagungsrate einer I/O-Schnittstelle eines Gerätes oder eine Netzübertragungsrate eines Datennetzes oder eines Busses der Automatisierungsanlage überwacht werden.

Weitere Ressourcen R des industriellen Gerätes G können je nach Anwendung und strukturellen Aufbau des industriellen Gerätes hinsichtlich ihrer Auslastung in nahezu Echtzeit während der Laufzeit der Anlage gemessen und überwacht werden, beispielsweise Sensorkapazitäten oder Aktuator-Ressourcen des industriellen Gerätes G.

Eine kritische Ressourcen-Nutzung einer Ressource R eines industriellen Gerätes G der Automatisierungsanlage wird durch Vergleichen mit definierten Ressourcennutzung-Schwellwerten SW in dem Schritt S2 des in Fig.1 dargestellten Verfahrens automatisch erkannt. Diese Ressourcennutzung-Schwellwerte SW können von einem Gerätehersteller des industriellen Gerätes oder durch einen Betreiber B der Automatisierungsanlage definiert werden und in einem Speicher abgelegt werden.

Erkannte Überschreitungen bzw. Unterschreitungen von Schwellwerten SW der überwachten Metriken (z.B. falls über 80% des verfügbaren Arbeitsspeichers eines industriellen Gerätes der Automatisierungsanlage verwendet werden) werden als Schwellwertereignis SW-E für das betreffende industrielle Gerät G protokolliert und abgespeichert.

In einem weiteren Schritt S3 wird eine im Schritt S2 erkannte kritische Ressourcen-Nutzung (Schwellwertereignis SW-E) einer Ressource R mit einer momentan aktiven Applikationskonfiguration assoziiert. Diese momentan aktive Applikationskonfiguration APP-KONFIG umfasst die auf dem jeweiligen industriellen Gerät G installierten und ausgeführten Applikationen APPs, sowie deren Konfiguration (z.B. in Form von APP-spezifischen Konfigurationsdateien).

Es erfolgt ein Assoziieren bzw. Zuordnen der erkannten Schwellwert-Ereignisse SW-E mit der momentan aktiven (installierten, laufenden) Applikation-Konstellation (= "Sammlung von Apps") bzw. Applikation-Konfiguration APP-KONFIG (z.B. bestimmte Parametrierung einer oder mehrerer Applikationen APPs, z.B. ein PLC-Ablaufprogramm). Zusätzlich kann diese Assoziation bzw. Zuordnung protokolliert werden, d.h. zwischengespeichert bzw. temporär vorgehalten werden, so dass die Prüfeinheit diese Information zur Prüfung verwenden kann, ob für die aktuelle Konstellation bereits ein Ressourcenengpass vorlag. Diese Assoziation kann mit der Zeit an Gültigkeit verlieren.

In einem weiteren Schritt S4 des in Fig. 1 dargestellten Verfahrens wird vor dem Starten einer weiteren geladenen Applikation APPneu auf dem industriellen Gerät G durch eine Prüfeinheit PE geprüft, ob für die momentan aktive Applikationskonfiguration eine kritische Ressourcen-Nutzung vorliegt oder in der Vergangenheit vorlag. Beim Installieren oder beim Starten einer weiteren Applikation, wird automatisch geprüft, ob für die momentan aktive Applikation-Konstellation bzw. Applikation-Konfiguration protokollierte Schwellwert-Ereignisse SW-E vorliegen oder nicht.

In einem weiteren Schritt S5 wird über eine Ausgabeeinheit AE eine Meldung an einen Betreiber B der Automatisierungsanlage dahingehend ausgegeben, dass das Ausführen der weiteren Applikation APPneu auf dem industriellen Gerät G zu einem Ressourcen-Engpass führen kann, falls die im Schritt S4 vorgenommene Prüfung ergibt, dass für die momentan aktive Applikations-Konfiguration bereits eine kritische Ressourcen-Nutzung vorliegt.

Falls mindestens ein protokolliertes Schwellwert-Ereignis SW-E vorhanden ist, erfolgt im Schritt S5 eine Benachrichtigung des Betreibers B der Automatisierungsanlage, dass ein Installieren oder Starten der weiteren Applikation APPneu zu der schon aktiven Applikation-Konstellation bzw. Applikation -Konfiguration einen Ressourcenengpass mit Funktionsbeeinträchtigung auslösen kann.

Fig. 2 zeigt schematisch in einem Blockdiagramm ein erfindungsgemäßes System (SYS) zur Vermeidung von Ressourcen-Engpässen bei industriellen Geräten einer Automatisierungsanlage mit ladbaren Applikationen.

Das System SYS gemäß Fig. 2 umfasst eine oder mehrere Überwachungseinheiten ÜE, welche dazu ausgelegt sind, eine Nutzung von Ressourcen R von industriellen Geräten während des Betriebs der Automatisierungsanlage zu überwachen und eine kritischen Ressourcen-Nutzung einer oder mehrerer Ressourcen R eines industriellen Gerätes G durch Vergleichen mit definierten Ressourcennutzungs-Schwellwerten SW zu erkennen. Eine erkannte kritische Ressourcen-Nutzung wird mit einer momentan aktiven Applikationskonfiguration von auf dem jeweiligen industriellen Gerät G ausgeführten Applikationen APPs assoziiert.

Das in Fig. 2 gezeigte System SYS weist ferner eine Prüfeinheit PE auf, welche dazu ausgelegt ist, vor dem Starten mindestens einer weiteren geladenen Applikation APPneu auf einem industriellen Gerät G der Automatisierungsanlage, zu prüfen, ob für die momentan aktive Applikationskonfiguration eine kritische Ressourcen-Nutzung vorliegt oder nicht.

Das in Fig. 2 dargestellte System SYS verfügt ferner über eine Ausgabeeinheit AE zur Ausgabe einer Meldung M an einen Betreiber der Automatisierungsanlage dahingehend, dass das Ausführen der weiteren Applikation APPneu auf dem industriellen Gerät G zu einem Ressourcen-Engpass führen kann, falls die durch die Prüfeinheit PE des Systems SYS vorgenommene Prüfung ergibt, dass für die momentan aktive Applikationskonfiguration eine kritische Ressourcen-Nutzung vorliegt.

Die Erfindung betrifft gemäß einem Aspekt ein industrielles Gerät G einer Automatisierungsanlage, auf dem Applikationen APPs zur Laufzeit, insbesondere während des laufenden Betriebes, nachinstalliert werden können (z.B. als Docker Container, Kubernetes Pods, Debian Pakete).

Bei dem industriellen Gerät G kann es sich z.B. um eine (virtuelle)Steuerung, ein PLC, ein HMI-Panel, ein IPC (Industrial PC), ein Edge-Gerät, eine Edge-Cloud, eine HCl (Hyperconverged Infrastructure), oder ein Cloud-System handeln.

Ein industrielles Gerät G, insbesondere ein Edge-Gerät, in einer industriellen Automatisierungsanlage bezieht sich auf eine Einheit, die in der Lage ist, Daten lokal zu erfassen, zu verarbeiten und zu analysieren, anstatt Informationen sofort an eine zentrale Cloud oder Steuerungsebene zu senden. Dies ermöglicht schnellere Reaktionszeiten, verringert die Abhängigkeit von der Netzwerkkonnektivität und verbessert die Datensicherheit.

Das industrielle Gerät G kann mit verschiedenen Sensoren verbunden sein, je nach den Anforderungen der Automatisierungsanlage. Diese Sensoren können Sensoren für Temperatur, Druck, Feuchtigkeit, Position, Bildverarbeitung und andere industrielle Parameter sein. In einigen Fällen können auch Aktuatoren integriert sein, um aufgrund von Analysen und Entscheidungen des Edge-Geräts physikalische Aktionen auszuführen.

Das industrielle Gerät G verfügt über eine gewisse Rechenleistung, um lokale Datenverarbeitung und Analyse durchzuführen. Dies kann durch Prozessoren oder spezialisierte Hardwarebeschleuniger erreicht werden.

Das industrielle Gerät G verfügt zudem über einen lokalen Speicher, um Daten zwischenzuspeichern und gegebenenfalls historische Informationen für spätere Analysen zu speichern.

Das Gerät kann über verschiedene Kommunikationsschnittstellen verfügen, darunter kabelgebundene (Ethernet) und drahtlose (WLAN, Bluetooth, etc.) Verbindungen, um mit anderen Geräten, Sensoren oder einer übergeordneten Steuerung der Automatisierungsanlage zu kommunizieren.

Das industrielle Gerät G ist vorzugsweise mit spezifischer eingebetteter Software ausgestattet, die es ermöglicht, Daten lokal zu verarbeiten und bestimmte Algorithmen auszuführen. Dies kann maschinelles Lernen oder Regelungsalgorithmen umfassen, je nach den Anforderungen der Automatisierungsanlage.

Ein industrielles Gerät G der Anlage implementiert zudem Sicherheitsmechanismen, um die Integrität und Vertraulichkeit der Daten und die sichere Kommunikation zu gewährleisten. Dies kann Verschlüsselung, Zugriffskontrollen und andere Sicherheitsmechanismen umfassen. In einigen Anwendungen ist Echtzeitfähigkeit entscheidend. Das Gerät G ist vorzugsweise in der Lage, Daten in Echtzeit zu erfassen, zu verarbeiten und zu reagieren, um den Anforderungen der Automatisierung gerecht zu werden. Insbesondere sogenannte Edge-Geräte spielen eine wichtige Rolle in der Entwicklung von sogenannten "Edge-Computing"-Architekturen, die die Leistung und Effizienz von Automatisierungssystemen verbessern.

Applikationen APPs und ihre Konfiguration AC (Application Configuration) werden durch einen Betreiber B (Operator) mit Hilfe einer Applikation-Installations-und-Konfigurationslogik APP-KL eines Applikation-/Device-Managementsystems AGM auf einer Automatisierungskomponente bzw. einem Gerät G der Automatisierungsanlage installiert bzw. konfiguriert (z.B. kundenspezifische Parametrierung).

Der Betreiber B der Automatisierungsanlage ist ebenfalls in der Lage installierte Applikationen APPs zu starten oder zu stoppen. Die ausgewählte Applikation wird durch eine auf dem Gerät G vorhandene Applikationsausführungslogik APP-AL ausgeführt.

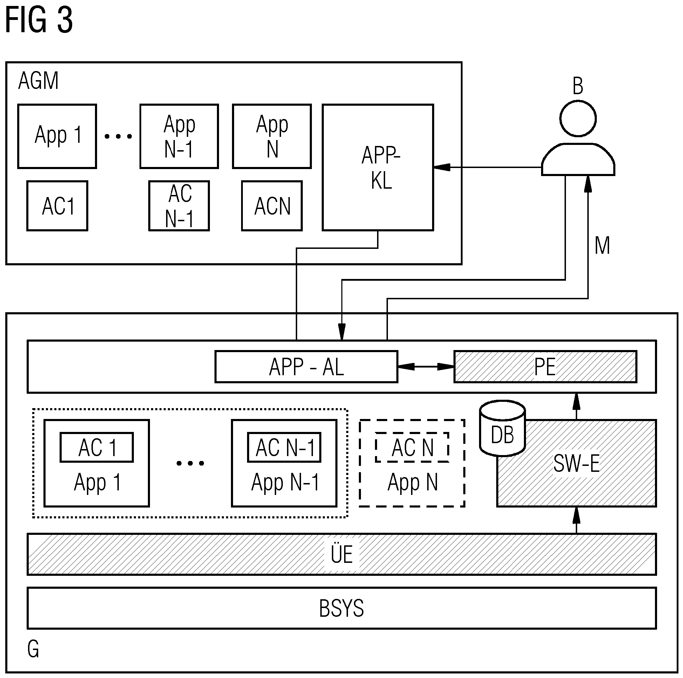

Die Fig. 3 zeigt schematisch ein erfindungsgemäßes Überwachen der durch eine Applikation-Konstellation und -Konfiguration verwendeten Ressourcen R (z.B. CPU-Auslastung, RAM und / oder Swap-Nutzung), in Kombination mit einer Prüfung bezüglich der Einhaltung bestimmter Ressourcen-Nutzungsgrenzen SW (Resource Usage Thresholds). Wird im laufenden Betrieb eine solche Ressourcen-Nutzungsgrenze bzw. ein solcher Ressourcennutzung-Schwellwert SW nicht eingehalten, wird ein entsprechendes Schwellwert-Ereignis SW-E automatisch generiert und der aktiven Applikations-Konstellation bzw. -Konfiguration zugeordnet (z.B. in einer Datenbank).

Fig. 3 zeigt schematisch ein industrielles Gerät G als Automatisierungskomponente einer Automatisierungsanlage. Das Gerät G umfasst ein Basissystem BSYS auf dem Host-Prozesse (keine Applikationen) mittels eines Betriebssystem-Kernels laufen. In dem dargestellten industriellen Gerät G können eine Anzahl N von Applikationen APPs auf Rechenkapazitäten des industriellen Gerätes G ausgeführt werden. Beispielsweise werden N-1 Applikationen momentan ausgeführt, während eine N-te Applikation noch nicht ausgeführt wird. Die momentane Applikationskonfiguration APP-KONFIG umfasst dann die Applikationen APP 1 bis APP N-1.

Eine Applikations-Installations- und Konfigurationslogik APP-KL eines Applikations- und Gerätemanagements AGM ist zur Installation und Konfiguration von ladbaren Applikationen APPS durch einen Betreiber B der Automatisierungsanlage vorgesehen. Der Betreiber B der Automatisierungsanlage kann mit Hilfe der Applikations-Installations- und Konfigurationslogik APP-KL Applikationen APPs auf der Automatisierungskomponente bzw. dem industriellen Gerät G konfigurieren und installieren.

Eine Applikations-Ausführungslogik APP-AL des Gerätes G ist zum Starten und Stoppen von Applikationen vorgesehen. Mit Hilfe der Applikations-Ausführungslogik APP-AL kann der Betreiber B installierte und konfigurierte Applikationen APPS starten oder stoppen. Hierzu können Applikationspakete und Konfigurationen aus dem Applikations- und Gerätemanagements AGM in die Applikations-Ausführungslogik APP-AL zur Ausführung durch einen oder mehrere Prozessoren des Geräte G geladen werden.

Die von den ausgeführten Applikationen APPS benutzten Ressourcen R des industriellen Gerätes G werden durch eine oder mehrere Überwachungseinheiten ÜE fortlaufend überwacht. Eine Überwachungseinheit ÜE des Gerätes G ist dazu ausgelegt, eine Nutzung von jeweils mindestens einer Ressource R des industriellen Gerätes G während des Betriebs des Gerätes G in der Automatisierungsanlage zu überwachen und eine kritische Ressourcen-Nutzung einer oder mehrerer Ressourcen R des industriellen Gerätes G durch Vergleichen mit definierten Ressourcennutzungs-Schwellwerten SW automatisch zu erkennen. Das Vergleichen der überwachten Ressourcen-Nutzung des industriellen Gerätes G mit definierten Ressourcennutzungs-Schwellwerten SW zum Erkennen einer kritischen Ressourcen-Nutzung kann lokal auf dem jeweiligen industriellen Gerät G durch dessen Überwachungseinheit ÜE oder auf einem externen Überwachungssystem erfolgen.

Eine durch die Überwachungseinheit ÜE oder das externe Überwachungssystem erkannte kritische Ressourcen-Nutzung wird mit der momentan aktiven Applikationskonfiguration APP-KONFIG der auf dem jeweiligen industriellen Gerät G ausgeführten Applikationen APPS beispielsweise in einer Datenbank DB assoziiert.

Eine durch Vergleichen mit Ressourcennutzungs-Schwellwerten SW durch die Überwachungseinheit ÜE erkannte kritische Ressourcen-Nutzung einer Ressource R des industriellen Gerätes G wird als Schwellwert-Ereignis SW-E gespeichert.

Eine Prüfeinheit PE ist dazu ausgelegt vor dem Starten einer weiteren geladenen Applikation APPneu auf dem industriellen Gerät G der Automatisierungsanlage, zu überprüfen, ob für die momentan aktive Applikationskonfiguration APP-KONFIG eine kritische Ressourcen-Nutzung vorliegt.

Falls die durch die Prüfeinheit PE vorgenommene Prüfung ergibt, dass für die momentan aktive Applikationskonfiguration eine kritische Ressourcen-Nutzung vorliegt, wird über eine Ausgabeeinheit AE des Gerätes G, insbesondere über eine Nutzerschnittstelle des Gerätes G, eine automatisch generierte Meldung M an einen Betreiber B der Automatisierungsanlage ausgegeben, welche den Betreiber B dahingehend informiert, dass das Ausführen einer weiteren Applikation APPneu auf dem industriellen Gerät G zu einem Ressourcen-Engpass führen kann.

Das Starten einer weiteren Applikation APPneu oder die Ausführung mindestens einer laufenden Applikation kann bei einer möglichen Ausführungsform des Systems SYS automatisch unterbunden werden, falls die vor dem Starten der weiteren Applikation APPneu durch die Prüfeinheit PE vorgenommene Prüfung ergibt, dass für die momentan aktive Applikationskonfiguration APP-KONFIG eine kritische Ressourcen-Nutzung vorliegt.

Mögliche Schwellwert-Ereignisse SW-E, welche durch die Überwachungseinheit ÜE erkannt und protokoliert werden, umfassen beispielsweise, dass der aktuell verwendete Arbeitsspeicherplatz (RAM) über 80% des verfügbaren Gesamtspeichers liegt oder das der Betriebssystem-Kernel einen OOM-Killer ausgelöst hat.

Ein weiteres mögliches Schwellwert-Ereignis SW-E ist gegeben, wenn der Kernel ein Memory-Reclaim (z.B. Pagecache flush / write-back, Memory Swap) durchführt, um Arbeitsspeicher freizumachen.

Ein weiteres mögliches Schwellwert-Ereignis SW-E tritt ein, wenn eine Rechenauslastung eines Prozessors über einen bestimmten Zeitraum hinweg (z.B. 2 Minuten) im Durchschnitt über einem Rechenauslastungsschwellwert liegt (z.B.90%).

Ein weiteres mögliches Schwellwert-Ereignis SW-E ist gegeben, sobald die Schreibrate auf ein nicht flüchtiges Speichermedium (z.B. Solid State Disk - SSD) für ein vorgegebenes Zeitintervall (z.B. 5 Minuten) im Durchschnitt weniger als eine bestimmte Datenrate (z.B. 300 MB/s) beträgt.

Ein weiteres mögliches Schwellwert-Ereignis SW-E besteht darin, das eine Übertragungsrate, beispielsweise die Netzwerk-Übertragungsrate, für eine bestimmte Netzwerkschnittstelle des Gerätes G für ein vorgegebenes Zeitintervall (z.B. 5 Minuten) im Durchschnitt weniger als eine bestimmte Datenrate (z.B.800 Mbits/s) beträgt.

Ein weiteres mögliches Schwellwert-Ereignis SW-E besteht darin, dass eine Realtime-Deadline nicht eingehalten wird, insbesondere wenn eine zu hohe Latenz und/oder ein zu hoher Signal-Jitter für die Antwort eines Prozesses auf Inputdaten gemessen wird.

Ein durch die Überwachungseinheit ÜE erkanntes bzw. detektiertes Schwellwertereignis SW-E umfasst das Überschreiten oder Unterschreiten von einem oder mehreren vordefinierten Ressourcen-Schwellwerten SW, beispielsweise eines vordefinierten Kapazitätsschwellwertes K-SW für einen Zeitraum, der länger ist als ein vordefinierter Zeitdauer-Schwellwert T-SW. Das Auftreten eines oder mehrerer Schwellwertereignisse SW-E kann protokolliert und mittels eines integrierten Zählers Z gezählt werden. Für jede Ressourcenart (z.B. Speicher, Rechner) kann ein zugehöriger Zähler Z vorgesehen sein, der zugehörige Schwellwert-Ereignisse SW-E zählt.

Weitere Ausführungsformen sind möglich. Beispielsweise können für jede Ressource R oder Ressourcenart mehrere untere Schwellwerte SW oder mehrere obere Schwellwerte SW für einen dazwischenliegenden zulässigen Auslastungsbereich der Ressource R definiert werden. Jedes Überschreiten eines der gestaffelten oberen Schwellenwertes stellt ein Schwellenwertereignis SW-E dar, das durch einen ersten Zähler Z1 gezählt werden kann. Jedes Unterschreiten eines unteren Schwellwertes stellt ein ebenfalls ein SchwellenwertEreignis SW-E dar, das durch einen zweiten Zähler Z2 gezählt werden kann. Beispielsweise gibt es einen ersten oberen Schwellwert bei 90% der Rechnerauslastung und einen zweiten oberen Schwellwert bei 95% der Rechnerauslastung. Ein Überschreiten des zweiten Schwellwertes kann höher gewichtet werden, da er hinsichtlich der Ressourcenauslastung und eines möglichen Engpasses bei der Ressource "Rechenleistung" bzw. CPU-Auslastung kritischer ist.

Die protokollierten Schwellwert-Ereignisse SW-E erlauben es zudem eine Auftrittshäufigkeit eines Schwellwert-Ereignisses SW-E während einer Betriebszeit des Gerätes G zu berechnen. Dies kann mit der Ausführungszeit einer Applikation APP verglichen werden, um Rückschlüsse auf die Auswirkung der Applikation auf die Ressourcenauslastung einer Ressource R des Gerätes G zu ziehen.

Falls eine weitere neue Applikation APPneu hinzugefügt (z.B. installiert, oder gestartet) werden soll, wird durch die Prüfeinheit PE geprüft, ob für die aktuell noch aktive Applikation-Konstellation bzw. Applikation-Konfiguration APP-KONFIG zugehörige Schwellwerte-Ereignisse SW-E vorliegen. Ist dies der Fall, wird durch die Prüfeinheit PE automatisch eine Meldung M, insbesondere eine Warnmeldung, generiert und dem Betreiber B der Automatisierungsanlage über eine Nutzerschnittstelle des Gerätes G präsentiert, z.B. über ein Web-Basiertes UI, welches zur Verwaltung von Applikationen verwendet wird.

Die generierte und ausgegebene Meldung M kann einen allgemeinen Hinweis enthalten, z.B. "Für das Ausführen dieser Applikation können möglicherweise nicht genügend Ressourcen auf dem System zur Verfügung stehen".

Die generierte Meldung M kann allerdings auch detailliertere Informationen enthalten, in denen Bezug auf protokollierte Schwellwert-Ereignisse genommen wird. Beispielsweise kann eine generierte Meldung M lauten: "Für das Ausführen dieser Applikation steht gegebenenfalls nicht genügend Arbeitsspeicher zur Verfügung, da die aktuell laufenden Applikationen den Arbeitsspeicher zwischenzeitlich zu über 90% ausgelastet haben".

Ferner kann, je nach betroffener Ressource R, in der Meldung M die mögliche Auswirkung hervorgehoben werden. Beispielsweise kann eine entsprechende Meldung M lauten: "Das Ausführen dieser Applikation kann zur Verlangsamung des Systems führen" wenn z.B. durch das Ausführen der weiteren Applikation die CPU-Auslastung zu hoch wäre. Die Meldung M kann auch beispielsweise lauten: "Das Ausführen dieser Applikation kann zu einem instabilen Verhalten des Systems führen wenn für die weitere Applikation nicht mehr genügend Arbeitsspeicher zur Verfügung steht".

Die Schwellwerte SW können von einem Gerätebauer, oder auch durch einen Betreiber definiert werden. In einer bevorzugten Variante wird ein Einhalten der Schwellwerte SW lokal auf dem industriellen Gerät G überprüft. In einer zweiten Variante können die Schwellwerte SW auch an ein weiteres System zur Überprüfung übergeben werden. In einer dritten Variante werden die überwachten Metriken bzw. Schwellwerte SW an ein weiteres System übergeben bzw. übertagen, welches bei Über- oder Unterschreiten der entsprechenden Schwellwerte zugehörige Schwellwert-Ereignisse SW-E generiert.

In einer Variante werden die für eine Applikation APP relevanten Ressourcen-Schwellwerte als Teil einer zugehörigen Applikation-Beschreibung (z.B. Applikation-Metadaten, Applikation-Deployment-Daten) spezifiziert. Auf diese Weise ist es möglich, auf Ressourcenengpässe bezüglich bestimmter Ressourcen R hinzuweisen, wenn eine Applikation APP installiert oder gestartet werden soll.

Zudem ist es möglich, dass die Schwellwert-Ereignisse SW-E und Informationen bezüglich zugehöriger Applikation-Konstellationen bzw. Applikation-Konfigurationen persistiert werden. Dadurch wird ermöglicht, dass die Informationen auch nach einem Reboot verfügbar sind. Weiterhin wird hierdurch ermöglicht, dass die Informationen auch nach einem zwischenzeitlichen Ändern der Applikation-Konstellation bzw. Applikation-Konfiguration weiterhin zur Verfügung stehen, insbesondere, falls z.B. zu einer vorherigen Applikation - Konstellation mit zugehörigem Schwellwert-Ereignis SW-E zurückgekehrt werden soll.

In einer weiteren Variante kann durch einen Betreiber B konfiguriert werden, ob bei der Installation bzw. beim Starten einer Applikation APP bei einem drohenden Ressourcen-Engpass nur eine entsprechende Meldung M ausgegeben werden soll, oder ob das Installieren bzw. das Starten der Applikation APP in diesem Falle auch automatisch unterbunden werden soll. Denkbar sind im Falle eines drohenden Ressourcen-Engpasses aufgrund einer weiteren gestarteten Applikation APPneu auch weitere Optionen bzw. Maßnahmen, wie z.B. das Stoppen von einer oder mehreren aktuell bereits laufenden Applikationen APPs mit nicht essenzieller Funktionalität. Dem Betreiber B der Automatisierungsanlage können auch verschiedene zielführende Maßnahmen vorgeschlagen werden, um den drohenden Ressourcen-Engpass zu vermeiden. Beispielsweise werden dem Betreiber B der Automatisierungsanlage Applikationen APPs mit einem hohen Speicherverbrauch angezeigt, falls bei der Ressource "Speicher" eine Überschreitung der Speicherauslastung droht. Es kann dem Betreiber B auch als Maßnahme vorgeschlagen werden, bestimmte Funktionalitäten abzuschalten, um bestimmte Ressourcenschwellwerte einzuhalten. Der Betreiber B kann dann daraus eine geeignete Maßnahme auswählen.

Bei einer vorteilhaften Weiterbildung können Schwellwert-Ereignisse SW-E von baugleichen oder baulich vergleichbaren Geräten G mit identischen Applikation-Konstellationen und Applikation-Konfigurationen APP-KONFIG verglichen werden, z.B. auf einem zentralen Server, um ein schadhaftes Verhalten einer oder mehrerer Applikationen APPs zu erkennen. Wenn z.B. eine kompromittierte oder schadhafte Applikation (bzw. eine kompromittierte oder schadhafte Applikation-Konfiguration) dazu verwendet wird, um durch das Verwenden zusätzlicher Ressourcen R die normale Funktionalität des Gerätes zu beeinträchtigen, oder anderweitige schadhafte Aktionen auszuführen (z.B. das Einlesen und Ausleiten sensibler Produktionsdaten, Verschlüsseln von Produktionsdaten (Ransom-Ware), etc.), kann dies zu einer stark erhöhten Ressourcenauslastung führen, die durch einen Vergleich von protokollierten Schwellwert-Ereignissen SW-E automatisch erkannt werden.

Das Nichteinhalten definierter Ressourcennutzungsgrenzen einer Applikation-Konstellation bzw. Applikation-Konfiguration wird protokolliert (Schwellwert-Ereignisse). Der Betreiber B wird bei dem Hinzufügen (Installation) weiterer Applikationen vor dem Start der Applikation auf einen dadurch verursachten möglichen Ressourcenengpass hingewiesen. Der Betreiber B wird somit bei einem drohenden Ressourcen-Engpass beim Installieren einer weiteren Applikation APPneu noch vor deren Start in einer generierten Meldung M proaktiv darauf hingewiesen, dass der neuen (um die zusätzliche Applikation erweiterten) Applikation-Konstellation bzw. Applikation-Konfiguration möglicherweise nicht mehr genügend Ressourcen R zur Verfügung stehen werden, da bei der bisherigen Applikation-Konstellation bzw. Applikation-Konfiguration bereits bestimmte Grenzen nicht eingehalten sind bzw. definierte Schwellwerte überschritten oder unterschritten sind.

Dies reduziert das Risiko eines eintretenden Ressourcenengpasses für den Betreiber B insbesondere in Szenarien, in denen ein industrielles Gerät G maximal flexibel konfiguriert und genutzt werden kann (z.B. keine Beschränkungen hinsichtlich der Anzahl von installierbaren Applikationen APPs besteht). In einer vorteilhaften Weiterbildung wird zudem das Erkennen von kompromittierten bzw. schadhaften Applikationen verbessert.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum Vermeiden von Ressourcen-Engpässen bei industriellen Geräten einer Automatisierungsanlage mit ladbaren Applikationen, mit den Schritten:
Überwachen (S1) der Nutzung von Ressourcen eines industriellen Gerätes während des Betriebes der Automatisierungsanlage;
Erkennen (S2) einer kritischen Ressourcen-Nutzung einer Ressource des industriellen Gerätes durch Vergleichen mit definierten Ressourcennutzung-Schwellwerten;
Assoziieren (S3) der erkannten kritischen Ressourcen-Nutzung mit einer momentan aktiven Applikationskonfiguration von auf dem jeweiligen industriellen Gerät ausgeführten Applikationen;
Prüfen (S4) vor dem Starten einer weiteren geladenen Applikation auf dem industriellen Gerät, ob für die momentan aktive Applikationskonfiguration eine kritische Ressourcen-Nutzung vorliegt oder in der Vergangenheit vorlag; und
Ausgeben (S5) einer Meldung (M) über eine Ausgabeeinheit (AE) an einen Betreiber (B) der Automatisierungsanlage dahingehend, dass das Ausführen der weiteren Applikation auf dem industriellen Gerät (G) zu einem Ressourcen-Engpass führen kann, falls die vorgenommene Prüfung ergibt, dass für die momentan aktive Applikations-Konfiguration eine kritische Ressourcen-Nutzung vorliegt.

2. Verfahren nach Anspruch 1, wobei die überwachten Ressourcen des industriellen Gerätes (G) eine verfügbare Speicherkapazität von Speichern des industriellen Gerätes (G) aufweisen.

3. Verfahren nach einem der vorstehenden Ansprüche, wobei die überwachten Ressourcen des industriellen Gerätes (G) eine verfügbare Rechenkapazität von Recheneinheiten des industriellen Gerätes (G) aufweisen.

4. Verfahren nach einem der vorstehenden Ansprüche, wobei die überwachten Ressourcen des industriellen Gerätes (G) eine verfügbare Übertragungsrate und/oder verfügbare Übertragungszeit von internen oder externen Schnittstellen des industriellen Gerätes (G) aufweisen.

5. Verfahren nach einem der vorstehenden Ansprüche, wobei eine erkannte kritische Ressourcen-Nutzung einer Ressource des industriellen Gerätes (G) protokolliert und gespeichert wird.

6. Verfahren nach einem der vorstehenden Ansprüche, wobei die über die Ausgabeeinheit (AE) ausgegebene Meldung (M) die protokollierte kritische Ressourcen-Nutzung angibt, welche die Meldung (M) auslöst.

7. Verfahren nach einem der vorstehenden Ansprüche, wobei das Vergleichen der überwachten Ressourcen-Nutzung eines industriellen Gerätes (G) mit definierten Ressourcennutzungs-Schwellwerten zum Erkennen einer kritischen Ressourcen-Nutzung lokal auf dem jeweiligen industriellen Gerät (G) oder auf einem externen Überwachungssystem erfolgt.

8. Verfahren nach einem der vorstehenden Ansprüche, wobei die ladbaren Applikationen (APPs) Metadaten aufweisen, welche die von der jeweiligen Applikation bei dessen Ausführung benötigten Ressourcen angeben.

9. Verfahren nach einem der vorstehenden Ansprüche, wobei das Starten der weiteren Applikation oder die Ausführung mindestens einer laufenden Applikation automatisch unterbunden wird, falls die vor dem Starten der weiteren Applikation vorgenommene Prüfung ergibt, dass für die momentan aktive Applikationskonfiguration eine kritische Ressourcen-Nutzung vorliegt.

10. Verfahren nach einem der vorstehenden Ansprüche, wobei eine durch Vergleichen mit Ressourcennutzungs-Schwellwerten erkannte kritische Ressourcen-Nutzung einer Ressource des industriellen Gerätes (G) als Schwellwert-Ereignis (SW-E) gespeichert wird.

11. Verfahren nach Anspruch 10, wobei für industrielle Geräte der Automatisierungsanlage gespeicherte Schwellwert-Ereignisse (SW-E) miteinander verglichen werden, um ein auffälliges Verhalten einer oder mehrerer Applikationen zu erkennen.

12. System (SYS) zur Vermeidung von Ressourcen-Engpässen bei einem oder mehreren industriellen Geräten (G) einer Automatisierungsanlage mit ladbaren Applikationen (APPs), insbesondere unter Verwendung eines Verfahrens gemäß einem der Ansprüche 1 bis 11,
mit mindestens einer Überwachungseinheit (ÜE), welche dazu ausgelegt ist, eine Nutzung von Ressourcen von industriellen Geräten (G) während des Betriebs der Automatisierungsanlage zu überwachen und eine kritische Ressourcen-Nutzung einer oder mehrerer Ressourcen eines industriellen Gerätes (G) durch Vergleichen mit definierten Ressourcennutzungs-Schwellwerten zu erkennen, wobei eine erkannte kritische Ressourcen-Nutzung mit einer momentan aktiven Applikationskonfiguration von auf dem jeweiligen industriellen Gerät(G) ausgeführten Applikationen assoziiert wird;
mit einer Prüfeinheit (PE), welche dazu ausgelegt ist, vor dem Starten einer weiteren geladenen Applikation auf einem industriellen Gerät (G) der Automatisierungsanlage, zu prüfen, ob für die momentan aktive Applikationskonfiguration eine kritische Ressourcen-Nutzung vorliegt oder in der Vergangenheit vorlag; und
mit einer Ausgabeeinheit (AE) zur Ausgabe einer Meldung (M) an einen Betreiber (B) der Automatisierungsanlage dahingehend, dass das Ausführen der weiteren Applikation auf dem industriellen Gerät (G) zu einem Ressourcen-Engpass führen kann, falls die durch die Prüfeinheit (PE) vorgenommene Prüfung ergibt, dass für die momentan aktive Applikationskonfiguration eine kritische Ressourcen-Nutzung vorliegt.

13. System nach Anspruch 12, wobei das industrielle Gerät (G) ein Steuerungsgerät, ein PLC, ein Mensch-Maschinen-Schnittstellengerät, ein industrielles Rechengerät, ein Edge-Gerät, ein HCI-Gerät oder ein Cloud-Gerät aufweist.

14. System nach Anspruch 12 oder 13,
wobei eine Applikations-Installations- und Konfigurationslogik (APP-KL) zur Installation und Konfiguration von ladbaren Applikationen durch einen Betreiber der Automatisierungsanlage vorgesehen ist; und/oder
wobei eine Applikations-Ausführungslogik (APP-AL) zum Starten und Stoppen von Applikationen vorgesehen ist.

15. Industrielles Gerät für eine Automatisierungsanlage, welche mit einem System nach einem der Ansprüche 12 bis 14 zur Vermeidung von Ressourcen-Engpässen bei dem industriellen Gerät ausgestattet ist.
